Europäisches Patentamt

European Patent Office

Office européen des brevets

(11) Publication number: **0 312 388 B1**

(12) **EUROPEAN PATENT SPECIFICATION**

(45) Date of publication of patent specification: **23.12.92** (51) Int. Cl.5: **B29D 30/48**

(21) Application number: **88309649.7**

(22) Date of filing: **14.10.88**

(54) **Method and apparatus for applying bead filler to a tyre.**

(30) Priority: **16.10.87 JP 262265/87**

(43) Date of publication of application:
**19.04.89 Bulletin 89/16**

(45) Publication of the grant of the patent:
**23.12.92 Bulletin 92/52**

(84) Designated Contracting States:
**DE FR GB**

(56) References cited:
**EP-A- 0 196 521**
**US-A- 1 553 514**
**US-A- 3 962 020**
**US-A- 4 196 036**

(73) Proprietor: **SUMITOMO RUBBER INDUSTRIES LIMITED**
**No. 1-1, Tsutsui-cho 1-chome**
**Fukiai-ku Kobe-shi Hyogo(JP)**

(72) Inventor: **Kokubu, Satoru 1-29, Aza-Miyakohashiyama**
**Ooaza-Izumizaki Izumuzaki-mura**
**Nishishirakawa-gun Fukishima-ken(JP)**
Inventor: **Suga, Susumu 38-17, Aza Harayama**
**Ooaza-Kawaharada Nakajima-mura**
**Nishishirakawa-gun Fukishima-ken(JP)**
Inventor: **Itou, Susumu**
**8-2, Aza, Furuike**
**Shirakawa-ski Fukushima-ken(JP)**
Inventor: **Satou, Kazuo**
**3-9 Uzumoridal 3-chome Higashinada-ku**
**Kobe-shi Hyogo-ken(JP)**

(74) Representative: **Stewart, Charles Geoffrey**
**SP TYRES UK LIMITED Tyre Technical Division**
**Fort Dunlop Birmingham B24 9OT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 312 388 B1

## Description

The present invention relates to a method and an apparatus for applying a belt shaped bead filler to a tyre bead core and apex, in which the bead filler cords, at the overlapping joint portion thereof, are prevented from being angularly disturbed so as to avoid staggered joints and wrinkles.

As schematically shown in Fig.15 a tyre bead has an annular bead core A and apes B extending radially outwardly, a bead filler C which forms a reinforcing layer folded up from an internal circumferential surface AQ along both side faces of the apex B and inside the tyre carcass ply P.

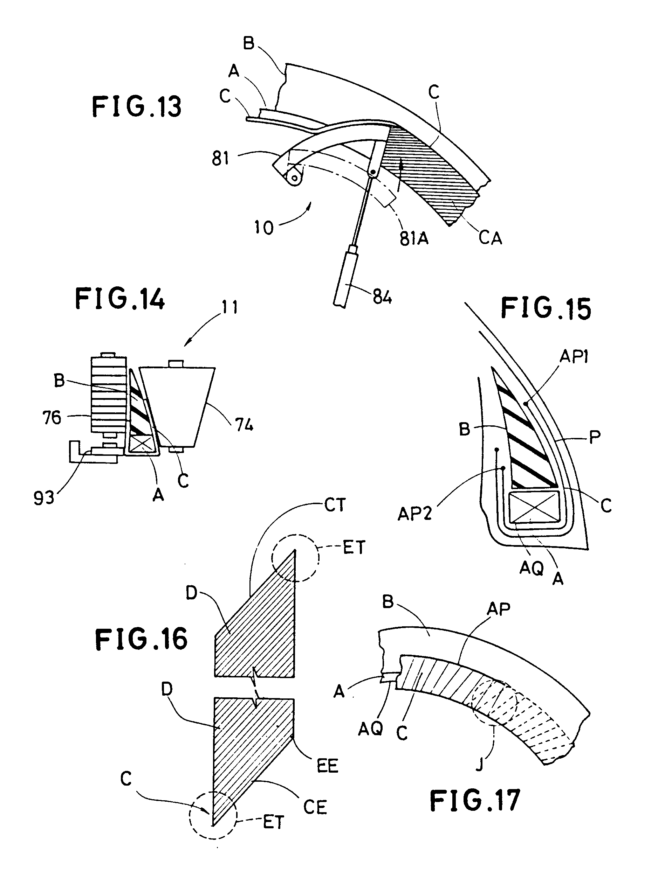

For such a bead filler C, as shown in Fig.16, there is generally used a belt shaped sheet formed by parallel filler cords D composed of organic fibres such as nylon, or inorganic fibres such as steel. The cords are arranged parallel with a specified inclination (for example, 45 degrees) to the longitudinal direction and are covered in unvulcanised rubber compound.

Various machines have been proposed to apply such bead fillers C for example, those shown in Japanese Patent Publication No. 52-36783 and Japanese laid Open No. 59-209844. In such conventional apparatus, however, a starting edge CT of the bead filler C is attached to the internal circumferential surface AQ of the bead core A and then the bead filler is gradually folded up around the bead core A radially outwardly from the starting edge CT according to the rotation of the bead core A.

However, such gradual folding up of the bead filler C along the bead core A as the bead filler C is being fed to the internal circumferential surface AQ of the bead core A, because the starting edge CT which is the starting portion for folding up the bead filler C and the terminating edge CE which is the end portion of folding are so called free ends which tended to deform easily, deformation is caused in folding up. The occurs especially at the tip portion ET which has a sharp triangular shape because of the bias or slant cutting along a filler cord D (shown in Fig.16). On folding up the filler cord D, as shown by a solid line in the circled part in Fig.17 puts the cord D at a larger angle in the radial direction than the original cord angle. Also when the obtuse triangular portion EE on the other edge is considered it is found that such a change of cord angle is scarcely generated as shown by broken lines in Fig.17.

As a result, in the joint overlapping portion J where the tip portion ET of the starting edge CT is superposed on the obtuse triangular portion EE of the terminating edge CE, because of the standing up of the cord at the tip portion ET, mismatching of cord angles occurs and the filler cords D cross each other so as to generate a so called staggered joint (i.e. the cord offset at the joint as shown in the circle in Fig.17).

Accordingly, a tyre with a uniform internal structure cannot be produced because of formation of resultant wrinkles in the region concerned and so adverse effects are exerted on the quality of the tyre such as filler cord looseness and deterioration in force variation of the completed tyres. The joint stagger moreover becomes more apparent according to the folding height, that is more apparent when the length from the internal circumferential surface AQ to the upper edge AP of the folded part is increased.

It is hence a primary object of the present invention to provide a method and an apparatus for applying a bead filler which are capable of preventing joint stagger in the bead filler thus preventing the formation of wrinkles, and thereby enhancing the quality of the tyre.

According to the invention relating to a method of applying a bead filler, the method is characterised by the steps of rotating a bead core with an apex previously mounted annularly on an outward surface of said annular bead core together with a belt shaped filler the starting edge of which is joined to an internal circumferential surface of said bead core mounting said bead filler on said internal circumferential surface in an approximately cylindrical shape so as to form an overlapping portion for joining of the starting edge and the terminating edge of the said filler, joining at least a part of said overlapping portion folding lip said cylindrical bead filler on both sides of said apex and bead core by rotating said bead core and pressing the filler to the apex and core so as to unify the filler (C) to the apex (B) and cord (A).

Another aspect of the invention provides bead filler applying apparatus characterised by a bead supporting means for supporting rotatably a bead core, with an apex previously mounted upon an outward surface of said annular bead core in the radial direction by the outer circumferential surfaces of a plurality of guide rollers arranged in a circle, bead filler guide means comprising a movable table capable of reciprocating for guiding and pushing and thereby holding the starting edge of a belt shaped bead filler against the internal circumferential surface of said bead core supported by said bead supporting means, bead filler cutting means having a cutter for cutting said belt shaped bead filler to a length slightly longer than the length of said circumferential surface of the bead core bead rotating means for rotating said bead core supported by the bead supporting means and on which internal circumferential surface the starting edge of said bead filler is mounted, bead filler joining means for joining at least a part of the overlapping portion between the starting edge and the terminating edge of said bead filler mounted in an approximately cylindrical shape on the internal circumferential surface of said bead core with the rotation of said bead core, bead filler folding means for folding up said cylindrical bead filler on to both side faces of said apex and bead core (A) and bead filler press fitting means for adhering the folded bead filler to both side faces of the apex and the bead core (A).

Using the above apparatus according to this invention for folding up the bead filler radially outwardly of the bead core, the process of first joining at least the tip portion of the overlapping portion for the joint causes the filler cords in the overlapped portion to be raised and folded upwardly whilst maintaining uniform the original cord angles, and hence there is no risk of mismatching of angles between the cords at the starting edge and the terminating edge at the tip portion.

Embodiments of the present invention will now be described in detail, by way of example only with reference to the drawings, in which:

Fig. 1 (a) is a perspective view showing the principle part only of one embodiment of this invention,

Fig.1 (b) is a sectional view showing the relation of the positions and inclinations of the bead core and bead filler

Fig.2 is a side elevation showing the principle parts of the apparatus.

Fig.3 is a view of the line Z-Z in Fig.2

Fig.4 is a perspective view showing the guide rollers and filler joining means

Fig.5 is a perspective view showing the fourth and fifth guide rollers and the bead positioning means

Fig.6 is a perspective view showing the filler guide means and filler cutting means

Fig.7 is a perspective view showing the filler folding up means

Fig.8 is a perspective view showing the filler press fitting means

Fig.9 is a plan showing the operation of the filler cutting means

Fig.10 (a) is a front view schematically showing the operation of the filler guide means

Fig.10 (b) is a sectional view on the line X-X in Fig 10 (a) showing pressing the starting edge of the filler against the internal circumferential surface of the bead core.

Fig.10 (c) is a front view showing the filler cutting means position

Fig.10 (d) is a sectional view on the line Y-Y in Fig.10 (c)

Fig.10 (e) is a perspective view showing a bead filler mounted cylindrically on the bead core and apex

Fig.10 (f) is a front view showing the completely finished state of the assembly of the bead filler to the bead core

Fig.10 (g) is a sectional view in the radial direction of Fig.10 (f)

Fig.11 is a front view of the filler joining means

Fig.12 is a plan view showing the relative position between the overlapping portion of the filler and the filler joining means.

Fig 13 is a front view showing the operation of the filler folding up means

Fig.14 is a sectional view showing the operation of the filler press fitting means

Fig 16 is a plan view showing the bead filler and

Fig 17 is a front view showing a staggered joint as in the prior art.

The method of the invention is characterised by the step of firstly joining at least a part of the overlapping portion or joint portion of a bead filler C before folding up the bead filler C radially outwardly.

A tyre bead core A is an annular body formed by coiling rubbered steel cords and its dimension is preset depending on the tyre size for which it is intended. In addition, on the bead core A a bead apex B having a triangular section and composed of hard rubber is mounted in an annular shape around the entire external circumference of the bead core A by a previous process.

A bead filler C comprises in this embodiment a belt shaped sheet formed by cutting a belt shaped tyre fabric or cloth composed of organic cords such as nylon or Kevlar (registered trademark) coated with rubber. The fabric is specified in width, bias, (for example 45 degrees in regard to the lengthwise direction ) and is made by joining a multiple of cut pieces at their non cut edges to form a endless belt of filler fabric of the required cord angle.

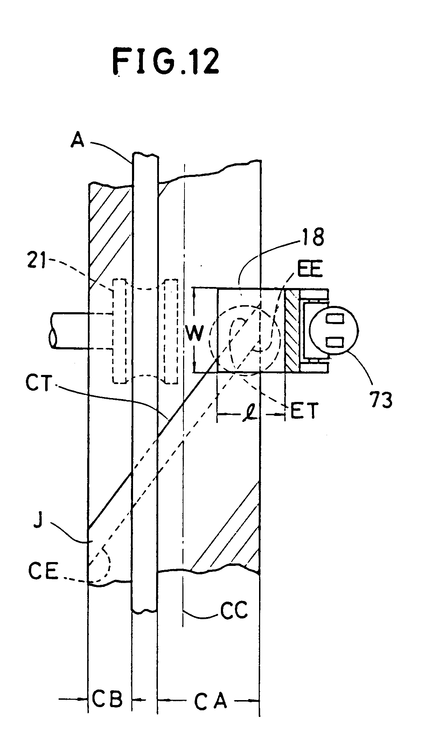

Furthermore, in the bead filler C in this embodiment, the centre line CC of the filler fabric is displaces from the bead core A as shown in Fig 12 so that the overhanging portion CA is made wider than the other over-hanging portion CB. As a result, when the filler C is folded up at both sides of the bead, as shown in Fig.15, the heights of the folded up edges AP1 and AP2 of the filler are different and a preferable step is formed, which avoids a sudden change in stiffness in the tyre bead. In order to prevent the staggered joint, as described above, in this joint portion the overlapping portion J of the bead filler C is firstly joined before folding up at the wider overhanging portion CA.

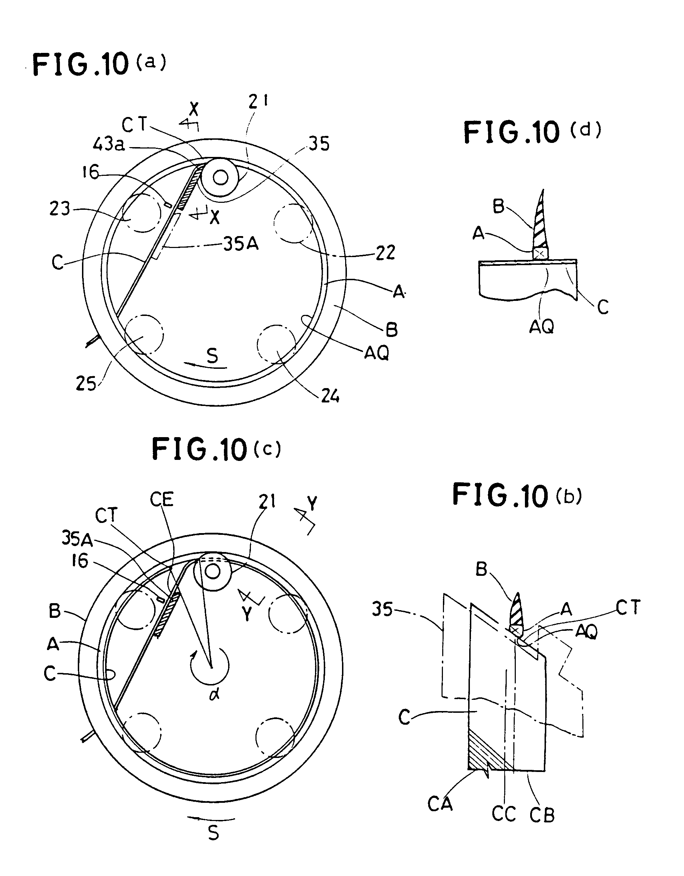

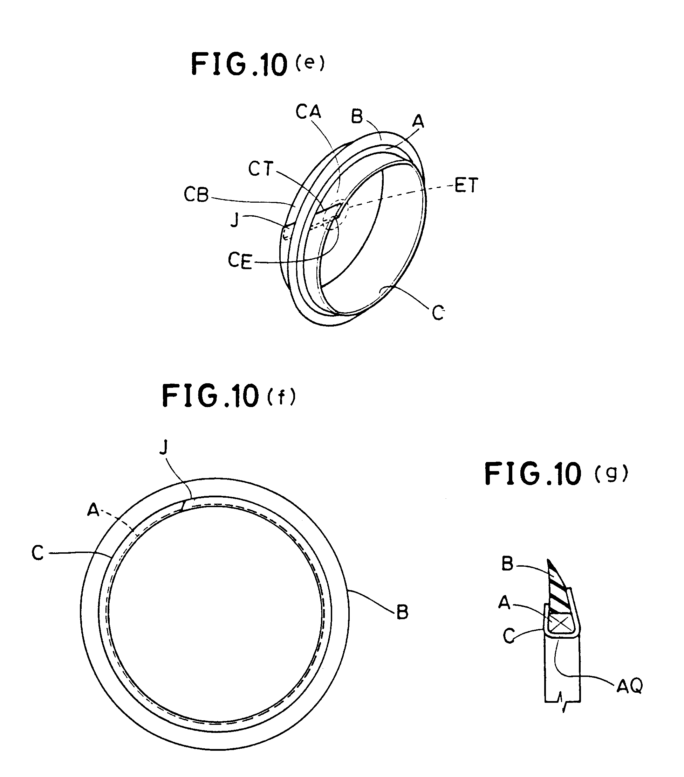

In this invention, the bead core A as shown in Fig.10a & b is rotated in the direction of the arrow S and a starting edge CT of the belt shaped bead filler C is pressed against an internal circumferential surface AQ of the bead core A. The bead core A and its apex are supported and rotated together as an assembly and the rotation is stopped when the rotating angle of the starting edge CT of the bead filler reaches a predetermined angle ($\alpha$) (shown in Fig.10 (c), (d)). This angle ($\alpha$) is that where the length of the bead filler C from the starting edge CT to the cutting position of a cutter 16 becomes a slightly longer length than the length of the internal circumferential surface AQ of the bead core A. The total length is the sum of the length of the internal circumferential surface AQ and the length of the required overlapping portion J. The bead filler C is then cut in this state to the predetermined length obliquely along the filler cord D by the cutter 16. Then the bead filler C is located into an approximately cylindrical shape on the internal circumferential surface AQ as shown in Fig.10 (e) by further rotating the bead core A. In this way, the overhanging portion J for the filler joint is formed by the starting edge CT and the terminating edge CE of the bead filler C (shown in Fig.10 (e)). After uniting the joint by pressing together, the bead core A is rotated again for one revolution as shown in Fig.14 and at this time, the cylindrical bead filler C is folded up radially outwardly of the bead core A and simultaneously the overhanging portions are pressed and unified to both side faces of the bead core A and bead apex B, and thereby the bead filler is completely applied and stuck to the bead (see Figs 10 (b) (g) and Fig. 14). In this process, it is also possible to properly join the overlapping portion J of the bead filler C not only at the tip part ET but also the whole region of the overlapping portion. Consequently, before folding up the bead filler C radially outwardly of the bead core A, the overlapping portion J and especially the tip portion ET is joined, with the result that the filler cords D in the overlapping part J are folded up whilst keeping their original cord angles and there is hence no possibility of inducing mismatching of angles between the cords at the starting edge CT and the terminating edge CE in the tip portion ET.

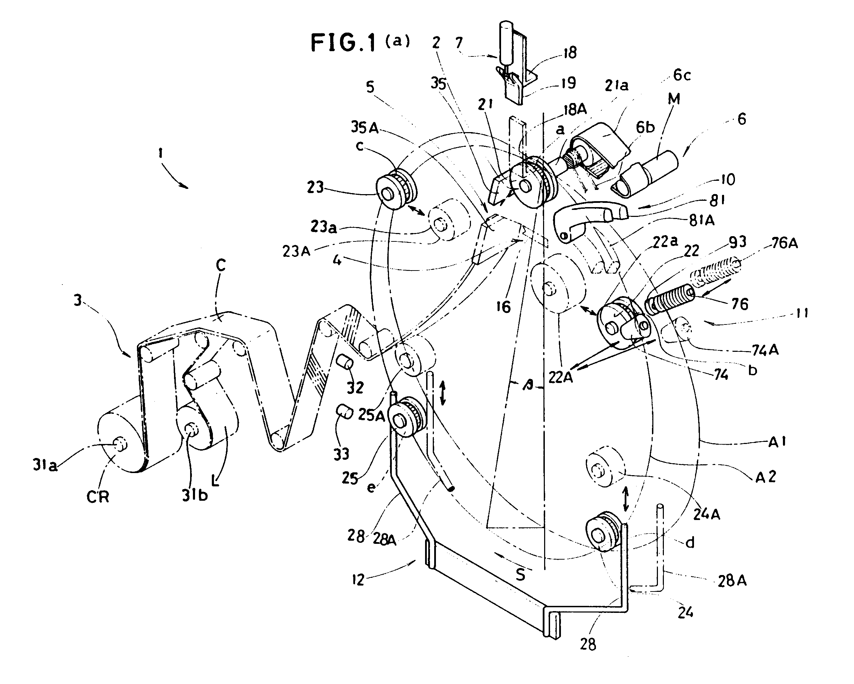

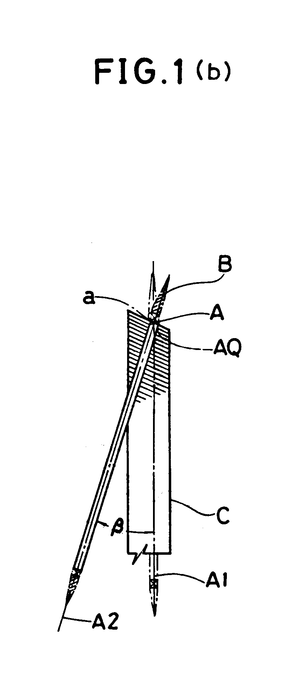

The invention provides in brief essentials apparatus used for executing the above method which is shown in Fig.1 (a) in which the frame of the apparatus is omitted and only the configuration of the major parts is shown.

The apparatus comprises guide rollers 21 to 25 to provide bead supporting means 2, filler feeding means and a filler cutting means 4 having a cutter 16. A bead filler guide means 5 has a movable table 35 and there is a bead rotating means 6 to drive at least one guide roller 21. Also provided is a filler joining means 7 comprising a receiving member 18 and a turning piece 19. A filler folding up means 10 has neat to it a filler press fitting means 11 comprising a cone roller 74 and a multiple stage disc roller 76. There is also a bead positioning means formed by positioning shafts 28.

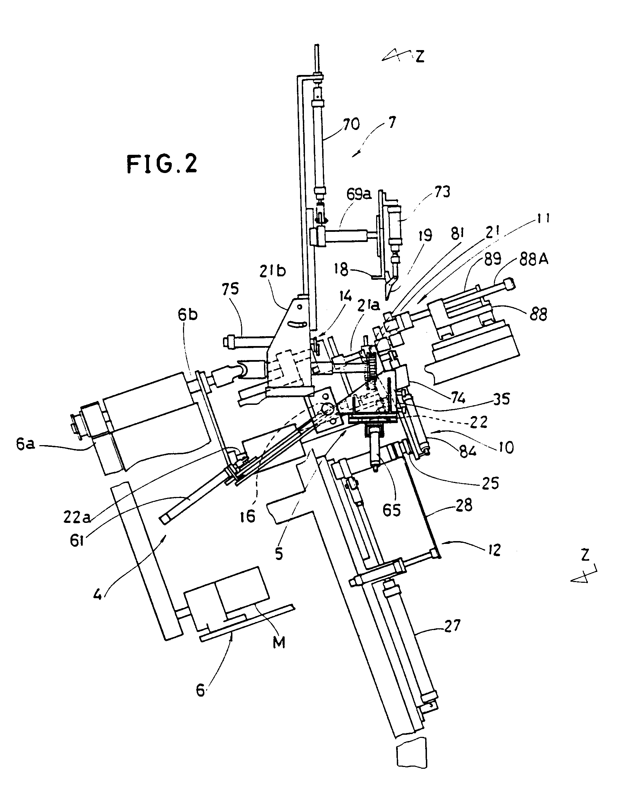

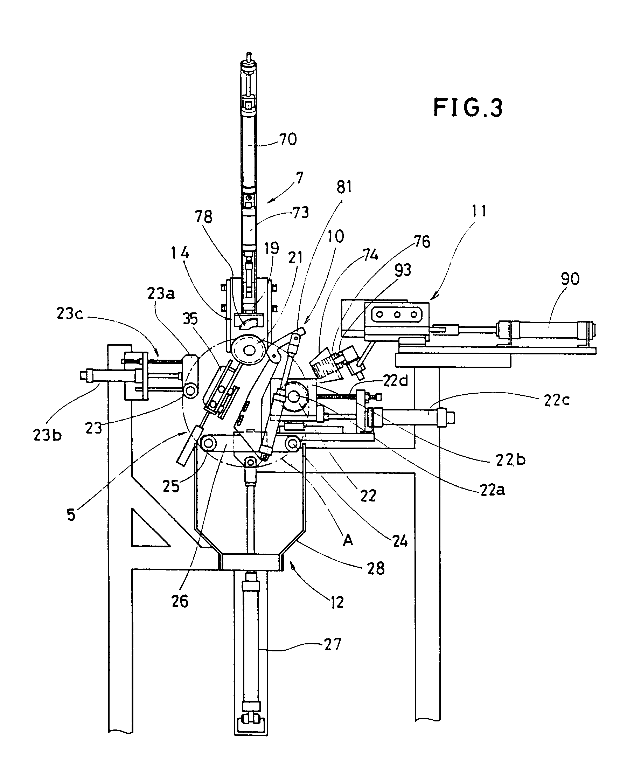

Fig.2 and 3 are a schematic front view and a left side elevation respectively, which show further details.

Described in more detail in Figs. 1 to 8 the bead filler applying apparatus 1 comprises a bead supporting means 2 for supporting an annular bead core A, bead filler feeding means 3 for feeding a bead filler C, bead filler cutting means 4 for cutting the bead filler C, bead filler guide means 5 for guiding the cut starting edge CT of the bead filler C towards the bead core A and attaching it to the internal circumferential surface of the bead core A, bead rotating means 6 for rotating the bead core A, bead filler joining means 7 for joining an overlapping portion J formed as a result of rotation of the starting edge CT and a termination edge CE of the bead filler C (shown in Fig.10 (e), Figs. 11 and 12), bead filler folding up means 10 for folding up the bead filler C outwardly in the radial direction of the bead core A, and bead filler press fitting means 11 for press fitting the folded bead filler C to the bead apex B and the bead core A. This apparatus may be furthermore equipped with bead positioning means 12 for accurately determining the position at which the filler is positioned on the bead core. The bead filler C is formed by arranging relatively short cords in parallel set at an angle to the lengthwise direction and embedded in unvulcanised rubber compound. Such a filler is easily deformed and subject to cord disturbance. Accordingly, it must be handled so as not to receive external force (stress) in the feeding or guiding processes. As a result, in the apparatus 1, as shown in Figs 1(a), (b) the bead filler C is fed and guided by the filler feeding means 3 and the filler guide means 5 with its centre line always passing through a single perpendicular plane A, and the bead core A is supported by the bead supporting means 2 so that the bead core A is maintained in a plane A2 which is inclined from the vertical plane A1 at an angle of ($\beta$). The two planes are arranged to have a common top point where the filler and bead are brought together but beneath that point the filler is clear of the bead.

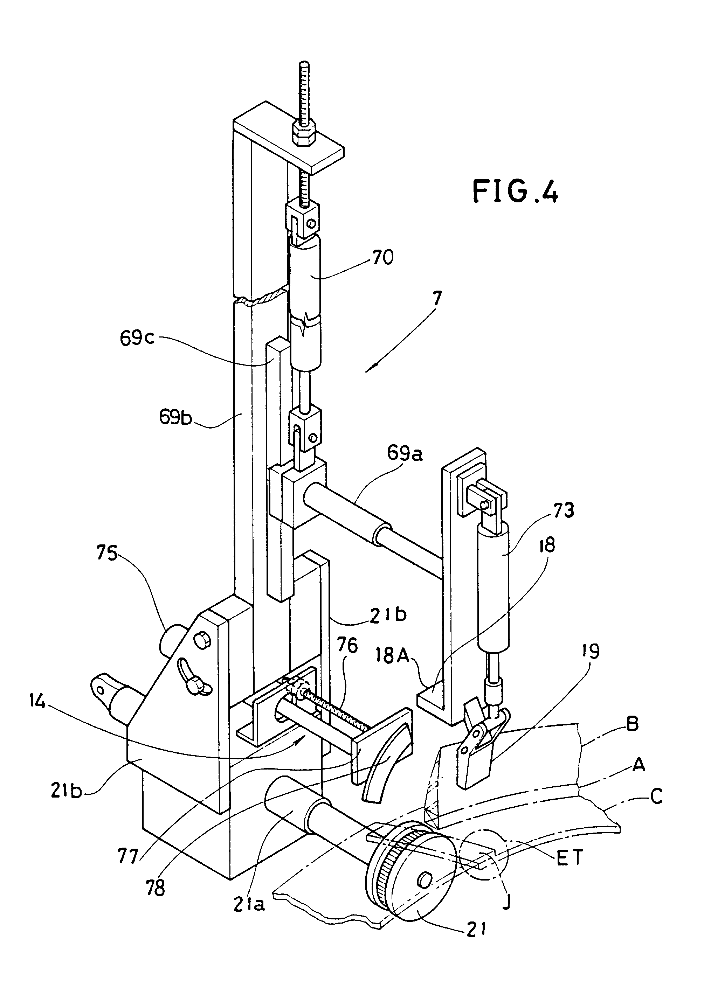

The bead supporting means 2 comprises first to fifth guide rollers 21,22,23,24 and 25. The first and second guide rollers 21,22 are composed of identical grooved rollers having a small groove in the axial direction to prevent the bead core A from slipping. The first guide roller 21 (shown in Fig.4) is positioned to support the bead core A at the peak point a and so that its supporting chaft 21a is horizontal to the frame, that is, perpendicular to the plane A1. The second guide roller 22 supports the bead core A at a point b separated by approximately 70 degrees in the clockwise direction in the drawing, that is, disposed in the direction of the core shown by arrow S from the peak point a and its supporting shaft 22a is at right angles to the plane A2.

The first guide roller 21 is, as shown in Fig.1 (a) linked at its supporting shaft 21a to the bead rotating means 6, composed of a rotating machine M such as a reduction motor, through transmission means 6a such a timing belt, and a universal coupling.

As a result, the bead rotating means 6 can drive the first guide roller when required in the direction shown by the arrow S. The bead rotating means 6 is also linked to a supporting shaft 22a of the second guide roller 22 through a power transmission means 6b.

The third guide roller 23 has a grooved cylindrical shape, which supports the bead core by its groove at a position c approximately 70 degrees from the peak point a to the left in the drawing, that is, in the anti rotation direction.

The second and third guide rollers 22 and 23 are, as shown in Fig.3 pivoted by bearing frames 22b and 23a which can reciprocate, by cylinders 22c 23b linked to the bearing frames 22b and 23a, from the operating position supporting the bead core A at the positions b and c to inner release positions 22A, 23A, shown by a chain line in Fig.1 (a). On the cylinders 22c, 23b positioning levers 22d, 23c for maintaining at the operating positions b,c are furnished.

The fourth and fifth guide rollers 24, 25 are grooved cylindrical rollers of approximately the same shape as the third guide roller 23, which can support the bead core A rotatably by their grooves at positions d and e approximately 140 degrees to the left and right of the peak point a.

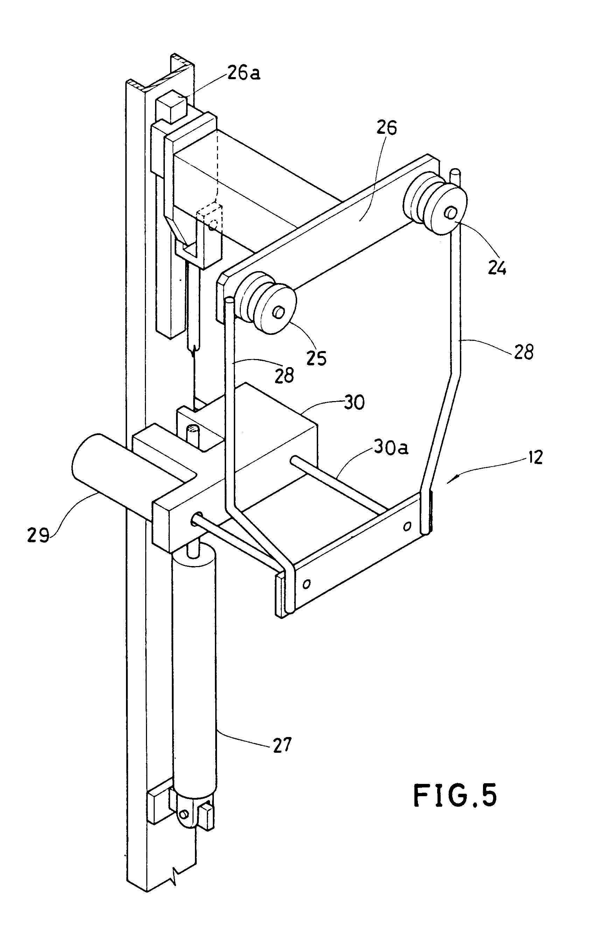

The fourth and fifth guide rollers 24 and 25 are as shown in Fig.5, pivoted freely rotatably at both edges of a coupling shaft 26, and the coupling shaft 26 is mounted on a perpendicular guide 26a mounted on a vertical member of the frame through a joint shaft and a linear bearing, and also linked to a cylinder 27 supported at the lower part of the vertical member so that it can rise up to release positions 24A, 25A shown by a chain line in Fig. 1 (a).

The movement of the second to fifth guide rollers 22 to 25 up to the release positions 22A to 25A as described above allows the bead A to be mounted on the groove of the first guide roller 21 without interfering with the rollers 22 to 25 in a preparatory stage in the assembly process of the bead filler C, and the movement back to the operating positions causes the bead core A to be supported in the plane A2 while keeping it a complete circle by the equally divided five supports and it also causes the bead positioning means 12 to hold the lower part of the bead core A for mounting it.

The bead position means 12 is, as shown in detail in Fig. 5, designed so that a pair of supporting shafts 28, standing lip outside the fourth and the fifth guide rollers 24, 25 are vertically fixed to a moving plate and the moving plate is linked to a cylinder 29 mounted at the back of a base frame 30 fixed on the vertical member of the frame, and the supporting shaft. Thus the lower part of bead core A at the plane A2 can be held by the action of the cylinder 29, and also the cylinder can withdraw the supporting shafts 28 to a release position 28A when the bead core A is supported by the guide rollers 21 to 25. The moving plate 30 has locking guides 30a passing through the base body and projecting therefrom.

The bead filler C is fed to the internal circumferential surface AQ of the bead core and guided near the first guide roller 21 by using the filler feeding means 3 and filler guide means 5.

The filler feeding means 3 comprises, as shown in Fig.1 (a), a supporting shaft 31a for supporting a bead filler roll CR, a supporting shaft 31 b for winding up a liner L linked to a motor with brake (not shown) for drawing out the liner L from the roll CR together with the filler, and upper and lower photoelectric apparatus 32, 33. The motor with brake drives the drawing shaft 31b so that the sagging length of the bead filler C formed in front of the apparatus 1 should be in the height ranges of the photoelectric apparatus 32,33, which makes it possible to prevent unnecessary external force (stress) from being applied to the bead filler C.

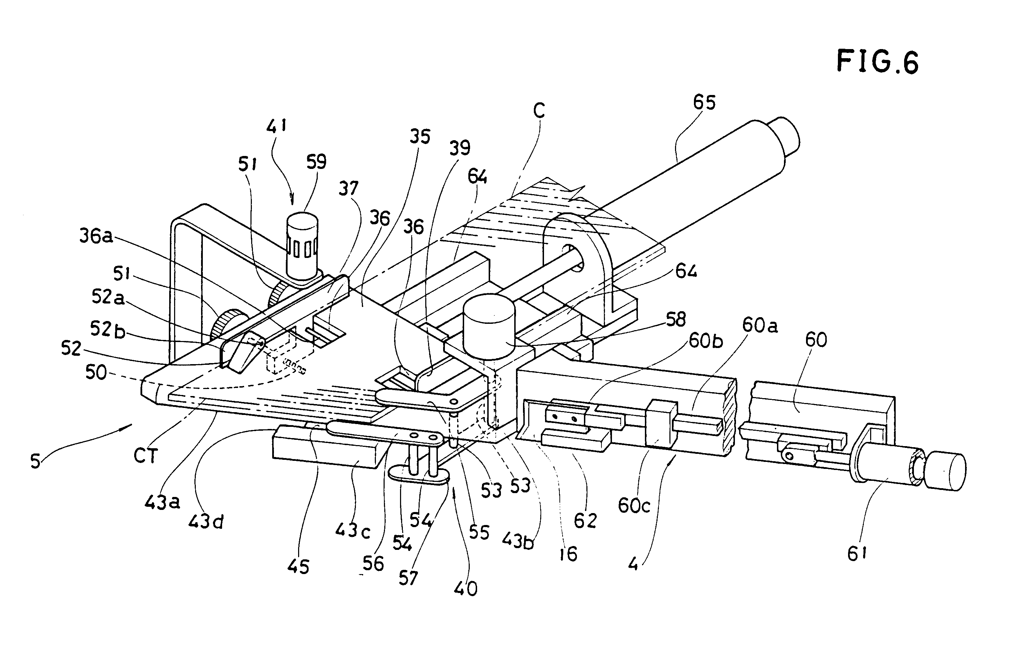

The bead filler guide means 5 is furnished with a movable table 35 reciprocating near the first guide roller 21 up and down somewhat obliquely toward the upstream side in the rotating direction S of the bead core A, and in this embodiment, as shown in Fig.6, the movable table 35 is equipped with guide plates 37, 39 for controlling the position in the sideways direction of the bead filler C, filler pressing means for pressing the bead filler C in cutting, and a blowing apparatus 41 for pressing the cut edge of the bead filler C by an air flow. Also the filler cutting means 4 is integrally mounted on the movable table 35.

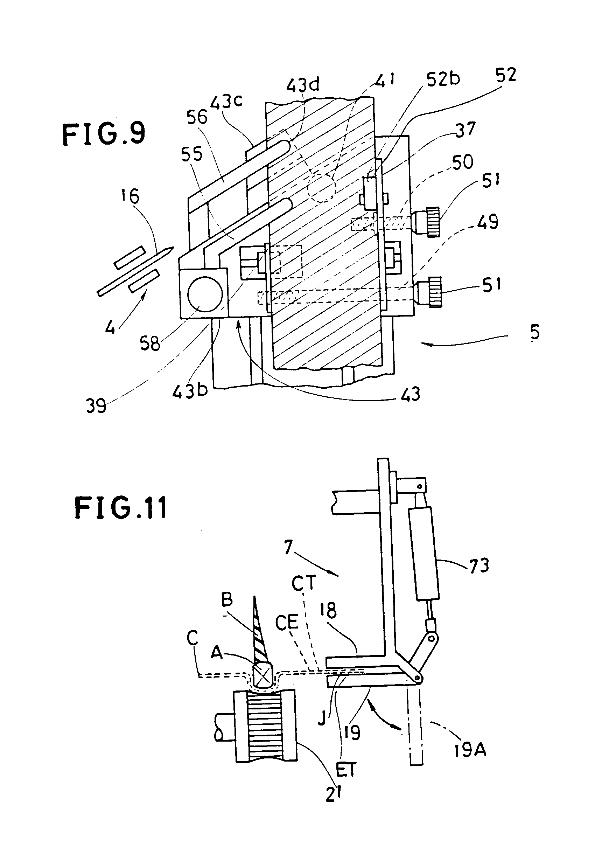

The movable table 35 as shown in Fig.6, comprises a pressing part 43a at an angle coinciding with that of the filler cords D on the front edge of a flat plate-shaped base plate 43, a protrusive part 43b on the side part of a shorter side extending sideways from the base plate 43 and a receiving part 43c protruding from the pressing part 43a, which forms a notch or groove 45 with the pressing part 43a through which a cutter 16 may pass. A side edge 43d of the receiving part 43c on the centre side prevents the collision between the receiving part 43c and the bead core A when there is movement of the movable table 35 by deflection from the position of the movable table 35 approaching near the bead core A by movement of the movable table 35 to the shorter side region. Rectangular openings 36 are formed on both sides of the centre region of the movable table, and adjustable guide plates 37, 39 are mounted on guide shafts 36a which cross the openings 36. The guide plates 37 and 39 are long plates on the upper surface of the movable table 35, and the bead filler C is guided between them. The guide plates 37, 39 are respectively engaged on screw shafts 49 and 50 (shown in Fig.9) which are pivoted on the movable table 35, which can move the guides 37, 39 by turning handles 51, 51 at one end each of the screw shafts 49, 50 so that the spacing between the guides 37, 39 is thereby adjusted freely according to the width and position of the centre line CC of the bead filler C to be guided. In addition, a holding means 52 is provided near the upper edge of the guide 37 which has a claw 52b for preventing dropout pivoted on a shaft 52a so that its tip rises upward and contacts with the upper surface of the movable table 35. This claw 52b engages with the bead filler C to prevent slip-off of the bead filler C from the base plate 43 of the movable table 35 by a wedging effect.

In the filler pressing means 40, a pushing piece 55 extending toward the centre part of the base plate 43 obliquely at an angle equal to the notch groove 45 through which the cutter passes is mounted on the upper ends of guide shafts 53 supported movably up and down at right angles to the base plate 43 by the protrusive part 43b. The lower ends of the guide shafts 53 are linked to each other by a coupling piece 57 at the lower part of the protrusive part 43b, and furthermore, a pushing piece 56, positioned above the receiving part 43 in the same direction as the pushing piece 55, is fixed by joint shafts 54. A cylinder 58 mounted on the protrusive part 43b through a supporting frame is linked to the upper part of the inner guide shaft and its contraction and expansion bring the pushing pieces 55, 56 closer to the base plate 43 of the movable table 35 and the upper surface of the receiving part 43c on both sides of the groove 45 and therefore makes it possible to pinch and hold the bead filler C for cutting.

The blowing apparatus 41 comprises a blower 59 generating sufficient air pressure to push the start edge CT of the bead filler C against the base plate 43, and the blower 59 has its nozzle directed near the pressing part 43a.

The bead filler cutting tool 4 comprises a cylinder 61 on a supporting plate 60 fixed to the protrusive part 43b and extending obliquely sideways, a cutter 16 attached to the cylinder 61 through a guide shaft 60a and a fitting 60b and a heater 62 for heating the cutter 16. The tip of the cutter has an approximate V shape, and the cutter 16 cuts the bead filler C obliquely along its forward and backward movement by moving from one edge to the other of the movable table 35 through the groove 45 at an angle coinciding with the filler cords D.

The guide shaft 60a is guided and prevented from turning by a linear bearing 60c. The cutting angle can be adjusted according to the filler cord angle by an appropriate angle adjuster mounted on the cutter 16 (not shown in the drawing). The heater 62 heats the cutter 16, for example, to about 100 degrees Cent., which makes it easy to cut the uncured rubber of the bead filler.

A linear bearing which slides on rails 64, mounted on the frame is mounted on the movable table 35 in its rear lower surface in the centre line direction, and a cylinder 65 mounted on the frame is also attached so that the movable table 35 can reciprocate by the elongation and contraction of the cylinder 65 from the operating position where the pressing part 43a of the movable table 35 is pressed against the internal circumferential surface AQ of the bead core A and the starting edge CT of the bead filler C is pressed against the bead core A and stuck, down in a waiting position 35A (shown in Fig.1(a)).

The bead rotating means 6 starts its operation after the filler guide means 5 presses the starting edge CT of the bead filler C to the bead core by the elevation of the movable table and it withdraws to the waiting position 35A. Accordingly, the rotation of the first and second guide rollers 21, 22 can turn the bead core A and mount the bead filler C continuously on the internal circumferential surface AQ of the bead core A. The attachment of the bead filler C causes the entire section to be in an approximate inverted T-shape as shown in Fig.10(d). When the bead has turned by an angle ($\alpha$), nearly one revolution as shown in Fig.10(c), where the length from the starting edge CT of the bead filler C to the operating position of the cutter 16 becomes equal to the sum of the length of the internal circumferential surface AQ of the bead core A plus that of the overlapping portion J for the joint, the bead rotating means 6 stops and the cutter 16 advances, and the bead filler C is thus cut. The bead rotating means 6 restarts and rotates the bead core A by slightly more than one revolution, and the bead filler C is thereby assembled to and stuck to the entire internal circumferential surface AQ of the bead core A including the overlapping portion J. As described above, the bead rotating means 6 can rotate the bead core A intermittently by approximately one revolution and the rotation is controlled by a pulse counter (not shown) on the rotating means 6.

In this way, the bead filler C is mounted cylindrically on the internal circumferential surface AQ of the bead core A, as shown in Fig.10(e) together with the overlapping part J.

The filler joining means 7 is located, as shown in Fig.4, above the first guide roller 21, on receiving pieces 21b, 21b on both sides of a bearing body for a supporting shaft 21a of the roller 21 so as to be capable of adjusting the forward and backward angle of inclination. Positioning means 14 for the bead filler is provided above the bearing body.

The filler joining means 7 comprises, as shown in Fig.4, Fig.11 and Fig.12, a receiving piece 18 capable of moving to or form the overlapping portion J of the bead filler C, and a turning member 19 pivoted on the receiving piece 18. The receiving piece 18 is a folded-over piece at the lower end of the L-shaped frame, and the L-shaped frame is linked to a linear bearing through a joint shaft 69a capable of adjusting its length. The linear bearing can slide a perpendicular rail 69c in front of a column 69b supported between the receiving pieces 21b, and the rod of a cylinder 70 mounted on a protrusion piece at the top of the column 60c by using a screw shaft so as to be capable of adjusting its height is connected to the linear bearing, so that the receiving piece 18 can reciprocate depending on the elongation and contraction of the cylinder 70 from a release position 18A above to a position where the pressfitting and joining of the overlapping part J of the bead filler C is required. In the drawing this is the position of contact with the upper surface of the tip portion ET of the bead filler in this embodiment in the arrow direction. The turning member 19 is pivoted in a bearing protruding downwards of obliquely at the root of the receiving piece 18, and a lever attached to the turning member 19 is joined to a cylinder 78 mounted rotatably on the 1 shaped frame. Consequently, the turning piece 19 can turn between the operation position superposed with the receiving member 18 and a waiting position 19A as shown in Fig.11 by the elongation and contraction of the cylinder 73. In the operating position, the tip portion ET of the overlapping portion J is consolidated and joined.

The width W and the depth (ℓ) of the receiving member 18 and the turning piece 19 are predetermined by the range to join and adhere within the overlapping portion J.

The positioning means 14 is arranged to provide a moving plate 77 whose protruding length is controlled by an adjusting shaft 76 on the rod of a cylinder 75 located between the receiving pieces 21b so that it guides an edge of the bead filler C transferred from the movable table 35 by an arc shaped guide piece 78 on the front surface of the moving plate 77.

The filler folding up means 10 and the filler press fitting means 11 are positioned between the first guide roller 21 and the second guide roller 22 as shown in Fig. 1(a) and Fig.3 and the filler press fitting means 11 comprises a conical roller 74 and a disc multistage roller 76.

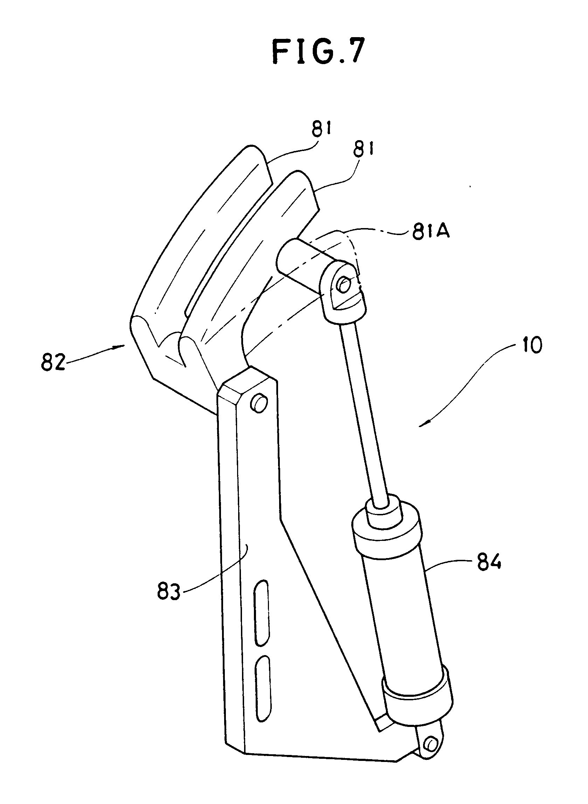

The filler folding tip means 10 has, as shown in Fig.7 a U-shaped folding up tool 82 joining to a pair of folding up pieces 81, 81 with an arc shaped top, bent in an arc shape and spaced with a clearance through which the bead core A can be inserted, at their root part. The root part is located on the first guide roller side 21 and pivoted in a supporting plate 83 and joined to a cylinder 81 at its tip. The supporting plate 83 is fixed to the frame by a bolt.

As a consequence, the filler folding up means 10 can tilt the folding up piece as shown in Fig.13 together with the elongation and contraction of the cylinder 84 between the operating position to fold up the overhanging parts CA & CB radially outwardly of the bead apex and a release position 81A shown by a dot and dash line.

The filler press fitting means 11 comprises a conical roller 74 and a disc multistage roller 76 as explained above.

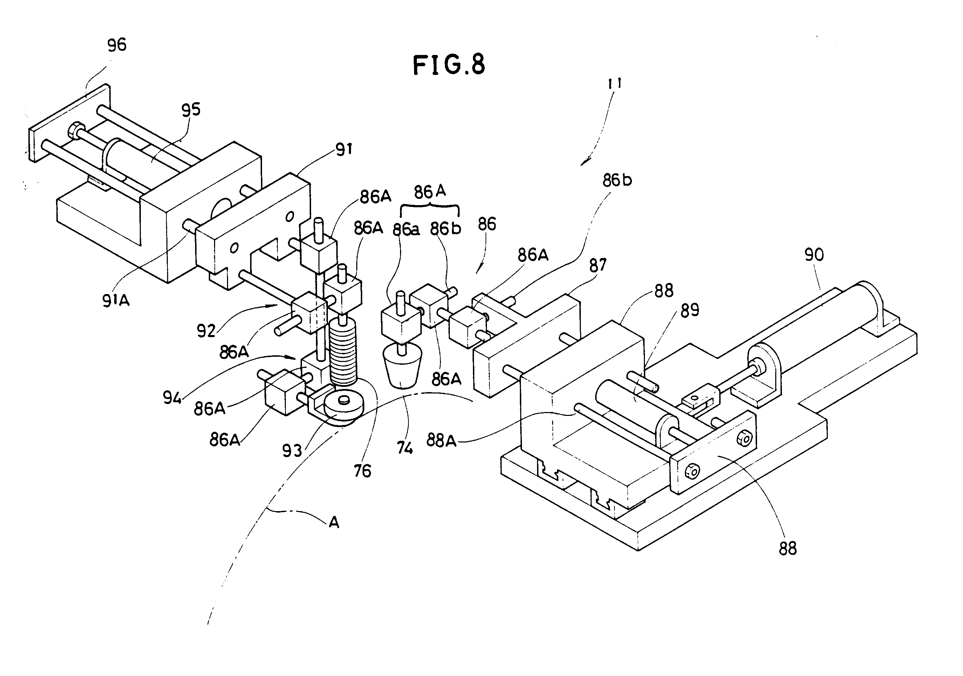

The conical roller 74 is, as shown in Fig.8 mounted on the moving plate 87 by position adjusting means 86. The moving plate 87 is fixed to a guide shaft 88A extending from a transverse table 88 approximately perpendicularly to the plane A2, and a cylinder 89 on the transverse table 88 is joined to the guide shaft 88A through a joint plate 88B. The transverse table 88 can advance and withdraw on the rail approximately parallel to the plane because it is connected to a cylinder 90 on a base table mounted on the frame.

As a result, extension of the cylinder 89 and contraction of the cylinder 90 moves the conical roller 74 to a release position 74A shown by a dot and dash line in Fig.1 (a) and furthermore, extension of the cylinder 90 causes it to move inwardly in the radial direction and then as shown in Fig.14 the action of the cylinder 90 causes the conical roller to move to the action position(shown by a solid line in Fig.1) where the bead filler C is securely press fitted to both side faces of the bead apex 8 and the bead core A in co operation with the disc multistage roller 76. The position adjusting tool 86 is composed of three supporting fittings 86A each of which is formed by protruding a fitting shaft 86B at an end of a base part 86A and making a hole perpendicular to the fitting shaft 86b, and the position and the direction of the conical roller 74 attached to the top end supporting fitting 86A can be adjusted by inserting a fitting shaft 86B of the adjacent supporting fitting 86A in the hole and fixing at the required position and angle. In the supporting fitting 86A of the root side, its fitting shaft 86b is inserted and fixed perpendicularly to a protrusion projecting from the moving place 87. The multistage disc roller 76 is attached to the lower part of an edge of the moving plate 91 by a position adjusting tool 92, and a guide roller 93 contacting with the bead core A is mounted on the moving plate 91 by using a further adjusting tool 94.

The moving plate 91 is mounted at an end of a guide shaft 91A passing the base table fixed to the frame, and the guide shaft 91A is linked to a cylinder 95 disposed approximately perpendicular to the plane A2 located on the base table through a coupling plate 96 at its rear end so that it may move between the operation position where it is in contact with the bead apex B and a spaced release position 76A. The position adjusting tools 92, 94 are formed by using supporting fittings 86A similar to those stated above.

The conical roller 74 having a shape the same as the side surface of the bead apex B is pivoted rotatably on the supporting fitting 86A, while the multistage disc roller 76 is a multistage stack of thin discs such as ball bearings in races which is rotatably supported in the same way on the top end supporting fitting 86A.

The operation of the apparatus of this invention will now be described.

At first, the second to fifth guide rollers 22 to 25 of the bead supporting means 2 are moved to the release positions 22A to 25A respectively. At the same time, the movable table 35 of the bead filler guide means 5, the receiving piece 18 of the bead filler joining means 7, the folding up piece 81 of the filler folding up means 10 and the conical roller 74 and the disc multistage roller 76 of the filler press fitting means are brought to their release positions, 35A, 18A, 81A, 74A and 76A respectively. Also the supporting shaft 28 of the bead positioning means 12 is advanced. In this state, mounting of the bead core A to the groove of the first guide roller 21 causes the lower end to be supported by the bead positioning means, and the bead core A to be inclined and held in the plane A2.

Sequentially when the second to fifth guide rollers 22 to 25 are returned to their operating positions, the bead core A is correctly supported in a complete circle. Then the supporting shafts 28 of the bead positioning means 12 are withdrawn to the release positions 28A.

The movable table 35 of the filler guide means 5 holds the starting edge CT of the preliminary cut bead filler C at its release position 35A while preventing it sliding off by the holding means 52, and presses it against the pressing part 43a by the blowing apparatus 41. The bead filler guide means 5 rises owing to the expansion of the cylinder 65 and adheres the starting edge CT of the bead filler C held by the pressing part 43a of the movable table 35, as shown in Figs.5. 10(a) (b), at the position deflecting from the filler centre CC by pushing against then internal circumferential surface A by adhesion (shown in Fig.10 (b)).

After this adhesion stage the movable table 35 is brought back to its release position 35A.

The bead rotating means 6 rotates the bead core A by the first guide roller 21 and the second guide roller being the drive of the rotating machine M. As soon as rotated, the bead filler C adheres to and is mounted on the internal circumferential surface AQ of the bead core A.

As explained above relating to Fig.10 (c) when the bead apex rotates by a rotating angle of ($\alpha$) and thus the length from the starting edge CT to a cutting portion of the bead filler C becomes equal to the sum of the length of the internal circumferential surface of the bead core plus that to form the overlapping portion J for joint, the bead rotating means 6 is stepped and the bead filler C is cut by the filler cutting means 4. The filler cutting means 4 cuts the bead filler C in the direction of the filler cords F by reciprocating the cutter 16 through the groove 45 by the action of the cylinder 61. During the cutting of the pieces 55, 56 are held down by the action of the cylinder 58 of the filler pressing means 40 so as to press and hold the bead filler C on the base plate 43, and as the cutter is heated by the heater 62, the bead filler C is correctly cut.

After cutting the bead rotating means 6 is restarted, and the application of the remaining bead filler C to the internal circumferential surface AQ up to the terminating edge CE causes the bead filler C to be mounted cylindrically as shown in Fig.10 (e) and the overlapping portion J for joint to be formed. When the tip portion ET of the overlapping portion J coincides with the peak point a of the bead core A, that is, the guide roller 21, the bead rotating means 6 is stopped, (Fig.12).

Sequentially the cylinder 70 of the filler joining means 7 is elongated to lower the receiving piece from the release position 18A and to make it abut against the upper surface of the tip portion ET of the overlapping portion J, and simultaneously the turning 19 is turned by the cylinder 73, and hence the bead filler C is fixed and joined, as shown in Figs 11 and 12 at the tip portion of the overlapping portion J (shown by a broken line circle in Figs.3 and 12) by the adhesion between the uncurred rubber sheets.

Next the bead rotating means 6 is restarted and the inclination of the folding up piece 81 to the operating position as shown in Fig.13 by the cylinder 84 of the filler folding up means 10 causes the bead filler C to be folded up outwardly in the radial direction around the bead core end its apex.

In succession, the actions of cylindrical 89, 90 and 95 of the bead filler press fitting means 11 cause the bead filler C to be press fitted to both side faces of the bead apex B and the bead core A as shown in Fig 14 by the conical roller 74 and disk multi stage roller 76. As explained above, since the overlapping portion J of the bead filler for joint is joined previously even when bending and folding up the bead filler C outwardly in the radial direction around the bead core A, the angle of the filler cords D is not changed, and therefore it becomes possible to fold up the bead filler correctly while keeping the original cord angle.

Here, it is possible to form the apparatus 1 of this invention so as to join the overlapping portion J at its whole length by using the filler joining means 7.

In addition, its continuous and unattended operation is possible by automatically feeding the bead core A to the guide roller 21 and taking out the bead core after finishing the bead filler applying process by using an appropriate closing and opening chuck.

It is furthermore preferable to apply a tack free treatment to the surface of the members of the apparatus contacting with the bead filler C by using Teflon or the like.

As explained above, since the bead filler applying method and its apparatus of this invention are designed so as to mount the bead filler cylindrical on the internal circumferential surface of the bead core, and to fold lip the bead filler outward in the radial direction after uniting or consolidating at least a part of overlapping portion for joint, the filler cord angles do not vary, and it hence becomes possible to enhance the quality of the tyres bead by preventing the formation of staggered joint and wrinkles.

**Claims**

1. A bead filler applying method characterised by the steps of rotating a bead core (A) with an apex (B) previously mounted annularly on an outward surface of said annular bead core (A) together with a belt shaped bead filler (C) the starting edge (CT) of which is joined to an internal circumferential surface (AQ) of said bead core (A), mounting said bead filler (C) on said internal circumferential surface (AQ) in an approximately cylindrical shape so as to form an overlapping portion (5) for joining by the starting edge (CT) and the terminating edge (CE) of the said filler (C) joining at least a part of said overlapping portion (J),folding up said cylindrical bead filler (C) on both sides of said apex (B) and bead core (A) by rotating said bead core (A) and pressing so as to unify the filler (C) to the apex (B) and cord (A).

2. A method according to claim 1, characterised in that the said bead filler (C) is in a sheet state formed by covering filler cords composed of organic fibres arranged parallel obliquely to the longitudinal direction with rubber.

3. A bead filler applying apparatus characterised by a bead supporting means for supporting rotatably a bead core (A),with an apex (B) previously mounted upon an outward surface of said annular bead core (A) in the radial direction, by outer circumferential surfaces of a plurality of guide rollers (21-25) arranged in a circle, bead filler guide means (5) comprising a movable table (35) capable of reciprocating for guiding and pushing and thereby holding the starting edge (CT) of a belt shaped bead filler (C) against the internal circumferential surface of said bead core (A) supported by said bead supporting means, bead filler cutting means (4) having a cutter (6) for cutting said belt shaped bead filler (C) to a length slightly longer than the length of said internal circumferential surface (AQ) of the bead core (A) bead rotating means (B) for rotating said bead core (A) supported by the bead supporting means (21-25) and on which internal circumferential surface the starting edge (CT) of said bead filler (C) is mounted,bead filler joining means (7) for joining at least a part of the overlapping portion (J) between the starting edge (CT) and the terminating edge (CE) of said bead filler (C) mounted in an approximate cylindrical shape on the internal circumferential surface (AQ) of said bead core (A) with the rotation of said bead core (A), bead filler folding means (10) for folding lip said cylindrical bead filler (C) on to both side faces of said apex (B) and bead core (A) and bead filler press fitting means (11) for adhering the folded bead filler (C) to both side faces of the apex (B) and bead core (A).

4. An apparatus according to Claim 3, characterised in that the said bead rotating means (6) is a rotary machine for driving said guide rollers (21-25) of the bead filler supporting means (6).

5. An apparatus according to Claim 3 or 4 characterised in that the said bead filler (C) is in a sheet form having filler cords composed of organic fibres arranged parallel obliquely to the longitudinal direction covered with rubber.

6. An apparatus according to Claim 3, 4 or 5 characterised in that the bead filler cutting means (4) cuts said belt shaped bead filler (C) in the same direction as the inclination of the cords of the bead filler (C).

7. An apparatus according to Claim 3, 4, 5 or 6 characterised in that the said bead filler joining means (7) is composed of a receiving piece (18) detachable from the overlapping portion (J) of the bead filler (C) and a turning member (19) pivoted on an edge of the receiving piece (18) so as to be superposed on the receiving piece (18) for pinching and joining at least a part of the overlapping portion (J) of said bead filler (C) by the superposition.

**Patentansprüche**

1. Wulstfüller-Aufbringverfahren, gekennzeichnet durch die Schritte, daß ein Wulstkern (A) mit einem vorher ringförmig an einer Außenfläche des ringförmigen Wulstkerns (A) angebrachten Reiter (B) zusammen mit einem bandförmigen Wulstfüller (C) gedreht wird, dessen Anfangskante (CT) an einer Innenumfangsfläche (AQ) des Wulstkerns (A) angebracht ist, daß der Wulstfüller (C) an der Innenumfangsfläche (AQ) des Wulstkerns (A) in annähernd zylindrischer Form angebracht wird, um so einen Überdeckungsabschnitt (5) zum Verbinden der Anfangskante (CT) und der Endkante (CE) des Füllers (C) zu bilden, daß mindestens ein Teil des überdeckenden Abschnitts (J) verbunden wird, daß der zylindrische Wulstfüller (C) an beiden Seiten des Reiters (B) und des Wulstkerns (A) durch Drehen des Wulstkerns (A) und Andrücken aufgefaltet wird, um so den Füller (C) mit dem Reiter (B) und dem Kern (A) zu vereinigen.

2. Verfahren nach Anspruch 1, dadurch gekennzeichnet, daß der Wulstfüller (C) in einem Schichtzustand ist, der gebildet wird durch Bedecken von aus organischen Fasern zusammengesetzten und parallel schräg zur Längsrichtung angeordneten Füllerkorden mit Gummi.

3. Wulstfüller-Anbringvorrichtung, gekennzeichnet durch ein Wulststützmittel zum drehbaren Abstützen eines Wulstkerns (A) mit einem vorher an einer Außenfläche des ringförmigen Wulstkerns (A) in Radialrichtung angebrachten Wulstreiter (B), durch in einem Kreis angeordnete Außenumfangsflächen einer Vielzahl von Führungswalzen (21-25), durch Wulstfüller-Führungsmittel (5), das einen bewegbaren Tisch (35) umfaßt, der zum Hin- und Hergehen befähigt ist, um zu führen und zu stoßen und dadurch die Anfangskante (CT) eines durch das Wulst-Stützmittel abgestützten bandförmigen Wulstfüllers (C) gegen die Innenumfangsfläche des Wulstkerns (A) zu halten, Wulstfüller-Schneidemittel (4) mit einer Klinge (6) zum Durchschneiden des bandförmigen Wulstfüllers (C) auf eine Länge, die geringfügig größer als die Länge der Innenumfangsfläche (AQ) des Wulstkerns (A) ist, Wulst-Drehmittel (6) zum Drehen des durch das Wulst-Stützmittel (21-25) abgestützen Wulstkerns (A), an dessen Innenumfangsfläche die Anfangskante (CT) des Wulstfüllers (C) angebracht ist, Wulstfüller-Verbindungsmittel (7) zum Verbinden mindestens eines Teils des überdeckenden Abschnitts (J) zwischen der Anfangskante (CT) und der Endkante (CE) des Wulstfüllers (C), der in annähernd zylindrischer Form an der Innenumfangsfläche (AQ) des Wulstkerns (A) angebracht ist, mit der Drehung des Wulstkerns (A), Wulstfüller-Faltemittel (10) zum Auffalten des zylindrischen Wulstfüllers(C) an beide Seitenflächen des Reiters (B) und des Wulstkerns (A), und Wulstfüller-Andrückpaßmittel (11) zum Anhängen des aufgefalteten Wulstfüllers (C) an beide Seitenflächen des Reiters (B) und des Wulstkerns (A).

4. Vorrichtung nach Anspruch 3, dadurch gekennzeichnet, daß das Wulst-Drehmittel (6) eine Drehmaschine zum Antreiben der Führungswalzen (21-25) des Wulstfüller-Abstützmittels (6) ist.

5. Vorrichtung nach Anspruch 3 oder 4, dadurch gekennzeichnet, daß der Wulstfüller (C) in Schichtform ist mit Füllerkorden aus organischen Fasern, die parallel zueinander schräg zur Längsrichtung angeordnet und mit Gummi bedeckt sind.

6. Vorrichtung nach Anspruch 3, 4, oder 5, dadurch gekennzeichnet, daß das Wulstfüller-Schneidemittel (4) den bandförmigen Wulstfüller (C) in der gleichen Richtung wie die Neigung der Korde des Wulstfüllers (C) schneidet.

7. Vorrichtung nach Anspruch 3, 4, 5 oder 6, dadurch gekennzeichnet, daß das Wulstfüller-Verbindungsmittel (7) zusammengesetzt ist aus einem Aufnahmestück (18), das von dem Überdeckungsabschnitt (J) des Wulstfüllers (C) abnehmbar ist, und einem Schwenkteil (19), das an einer Kante des Aufnahmestücks (18) so schwenkbar angebracht ist, daß es über das Aufnahmestück (18) gesetzt werden kann zum Andrücken und Verbinden mindestens eines Teils des Überdeckungsabschnitts (J) des Wulstfüllers (C) durch das Übereinanderlegen.

## Revendications

1. Procédé de pose d'une languette de talon, caractérisé par les phases consistant à faire tourner une tringle (A), avec un bourrage sur tringle (B) préalablement monté en anneau sur la surface extérieure de ladite tringle annulaire (A), en même temps qu'une languette en forme de bande, dont le bord de départ (CT) est assemblé à une surface circonférentielle intérieure (AQ) de ladite tringle (A), à monter ladite languette sur ladite surface circonférentielle intérieure (AQ), dans une forme approximativement cylindrique de façon à former une portion à recouvrement (5) pour assembler le bord de départ (CT) et le bord final (CE) de ladite languette (C) ; à assembler au moins une partie de ladite portion à recouvrement (J) ; à replier ladite languette cylindrique (C) sur les deux faces dudit bourrage sur tringle (B) et de la tringle (A), en faisant tourner ladite tringle (A) et en pressant de manière à assembler la languette (C) au bourrage sur tringle (B) et à la tringle (A).

2. Procédé selon la revendication 1, caractérisé en ce que ladite languette (C) se présente sous la forme d'une feuille formée en revêtant de caoutchouc des câblés de languette composés de fibres organiques et disposés parallèlement entre eux, obliquement à la direction longitudinale.

3. Machine de pose de languette caractérisé par des moyens de support de talon, destinés à supporter radialement une tringle (A) de talon mobile en rotation, avec un bourrage sur tringle (B) préalablement monté sur la surface extérieure de ladite tringle annulaire (A), à l'aide des surfaces circonférentielles extérieures d'une série de galets de guidage (21 à 25) agencés selon un cercle, des moyens (5) de guidage de la languette comprenant une table mobile (35) capable de décrire un mouvement alternatif pour guider et pousser, et ainsi maintenir, le bord de départ (CT) d'une languette (C) de talon en forme de bande contre la surface circonférentielle intérieure de ladite tringle (A) supportée par lesdits moyens de support de talon, des moyens (4) de coupe de la languette possédant un couteau (6) et destinés à couper ladite languette (C) en forme de bande à une longueur légèrement supérieure à la longueur de ladite surface circonférentielle intérieure (AQ) de la tringle (A), des moyens (B) de rotation du talon destinés à faire tourner ladite tringle (A) supportée par lesdits moyens (21 à 25) de support de talon et sur la surface circonférentielle intérieure de laquelle le bord de départ (CT) de ladite languette (C) est montée, des moyens (7) d'assemblage de la languette destinés à assembler au moins une partie de la portion à recouvrement (J) entre le bord de départ (CT) et le bord final (CE) de ladite languette (C) montée dans une forme sensiblement cylindrique sur la surface circonférentielle intérieure (AQ) de ladite tringle (A) avec la rotation de ladite tringle (A), des moyens (10) de repliage de la languette destinés à replier ladite languette cylindrique (C) sur les deux faces dudit bourrage sur tringle (B) et de ladite tringle (A), et des moyens (11) d'application par pression de la languette destinés à coller la languette (C) repliée contre les deux faces latérales du bourrage sur tringle (B) et de la tringle (A).

4. Machine selon la revendication 3, caractérisée en ce que lesdits moyens (6) de rotation de la tringle sont constitués par une machine rotative servant à entraîner lesdits galets de guidage (21 à 25) des moyens (6) de support de la languette.

5. Machine selon la revendication 3 ou 4, caractérisée en ce que ladite languette (C) se présente sous la forme d'une feuille comprenant des câblés de languette composés de fibres organiques, disposés parallèlement, obliquement à la direction longitudinale, et revêtus de caoutchouc.

6. Machine selon la revendication 3, 4 ou 5, caractérisée en ce que les moyens (4) de coupe de la languette coupent ladite languette (C) en forme de bande dans la même direction que l'inclinaison des câblés de languette (C).

7. Machine selon la revendication 3, 4, 5 ou 6, caractérisée en ce que lesdits moyens (7) d'assemblage de la languette sont composés d'une pièce réceptrice (18) qui peut être détachée de la portion à recouvrement (J) de la languette (C), et d'un élément tournant (19) articulé sur un bord de la pièce réceptrice (18) de manière à pouvoir se superposer à la pièce réceptrice (18) pour pincer et assembler au moins une partie de la portion à recouvrement (J) de ladite languette (C) par superposition.

FIG.1 (a)

# FIG.1 (b)

FIG.2

FIG.3

# FIG.4

FIG.5

FIG.6

# FIG.7

FIG.8

20

FIG.9

FIG.11

# FIG.10 (a)

# FIG.10 (d)

# FIG.10 (c)

# FIG.10 (b)

# FIG.10 (e)

# FIG.10 (f)

# FIG.10 (g)

# FIG.12

**FIG.13**

81

10

81A

CA

84

B

A

C

C

**FIG.14**

11

B

76

93

A

C

74

**FIG.15**

AP1

B

P

AP2

C

AQ

A

**FIG.16**

CT

ET

D

D

C

EE

CE

ET

**FIG.17**

B

AP

A

AQ

C

J